# EUROPÄISCHE PATENTSCHRIFT

(11) **EP 0 876 408 B1**
(45) Veröffentlichungstag und Bekanntmachung des Hinweises auf die Patenterteilung: **02.08.2000**
(21) Anmeldenummer: 97901578.1
(22) Anmeldetag: 22.01.1997
(51) Int. Cl.: C08F 10/00, C08F 4/64

(54) **VERFAHREN ZUR HERSTELLUNG VON POLYMERISATEN VON C 2- BIS C 10-ALKENEN IN GEGENWART VON METALLOCENKOMPLEXEN MIT KATIONISCH FUNKTIONALISIERTEN CYCLOPENTADIENYLLIGANDEN**
PROCESS FOR PREPARING POLYMERS OF C 2- to C 10-ALKENES IN THE PRESENCE OF METALLOCENE COMPLEXES WITH CATIONICALLY FUNCTIONALIZED CYCLOPENTADIENYL LIGANDS
PROCEDE DE PREPARATION DE POLYMERES D'ALCENES EN C 2 A C 10 EN PRESENCE DE COMPLEXES METALLOCENES AVEC DES LIGANDS CYCLOPENTADIENYLES FONCTIONNALISES CATIONIQUEMENT

(30) Priorität: 25.01.1996 DE 19602543
(43) Veröffentlichungstag der Anmeldung: 11.11.1998
(73) Patentinhaber: BASF AKTIENGESELLSCHAFT, 67056 Ludwigshafen (DE)
(72) Erfinder: KRISTEN, Marc, Oliver, D-67117 Limburgerhof (DE); JUTZI, Peter, D-33613 Bielefeld (DE); REDEKER, Thomas, D-33611 Bielefeld (DE)
(86) Internationale Anmeldenummer: EP9700277
(87) Internationale Veröffentlichungsnummer: WO9727227

(56) Entgegenhaltungen:
- WO-A-92/12117
- ORGANOMETALLICS, Bd. 13, 1994, Seiten 4140-4142, XP000671499 FLORES JUAN CARLOS: in der Anmeldung erwähnt

## Beschreibung

Die vorliegende Erfindung betrifft Verfahren zur Herstellung von Polymerisaten von C₂- bis C₁₀-Alkenen in Gegenwart von Katalysatorsystemen.

Die zur Polymerisation von Alkenen verwendeten Metallocene sind generell sehr luft- und feuchtigkeitsempfindlich, wodurch die Verwendung dieser Metallocene erschwert wird, da sie unter einer Inertgasatmosphäre gehandhabt werden müssen.

Die EP-A 608 054 beschreibt Katalysatorsysteme zur Herstellung von Polyolefinen, bei denen die Metallocenkomplexe Lewis-Basenfunktionalisiert sind. Diese Komplexe sind sehr luft- und feuchtigkeitsempfindlich.

Den gleichen Nachteil weisen die in Organometallics 1994, 13, 4140-4142 beschriebenen Katalysatorsysteme zur Herstellung von Polyethylen und Polypropylen auf, die ebenfalls Lewis-Basen-funktionalisierte Metallocenkomplexe enthalten.

Aufgabe der vorliegenden Erfindung war es daher, Metallocenkatalysatorsysteme zur Polymerisation von Alkenen zur Verfügung zu stellen, die luft- und feuchtigkeitsunempfindlich und somit einfacher handhabbar sind.

Demgemäß wurden Verfahren zur Herstellung von Polymerisaten von C₂- bis C₁₀-Alkenen in Gegenwart von Katalysatorsystemen gefunden, wobei als Katalysatorsysteme solche eingesetzt werden, die als aktive Bestandteile
A) einen Metallocenkomplex der allgemeinen Formel I 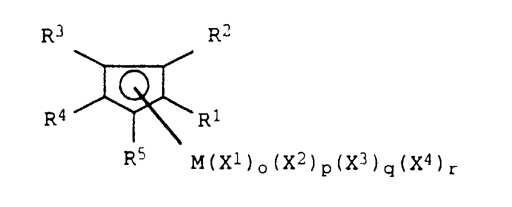 in der die Substituenten und Indices folgende Bedeutung haben:
   - M: Titan, Zirkonium, Hafnium, Vanadium, Niob oder Tantal,
   - R¹ bis R⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, 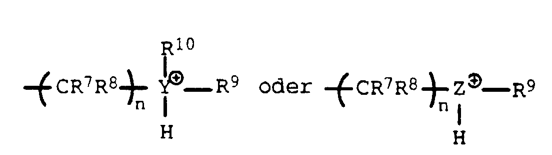 mit
   - R⁶: C₁- bis C₁₀-Alkyl, C₆- bis C₁₅-Aryl oder C₃- bis C₁₀-Cycloalkyl,
   - R⁷ und R⁸: Wasserstoff, C₁- bis C₁₀-Alkyl, C₆- bis C₁₅-Aryl oder C₃- bis C₁₀-cycloalkyl,
   - R⁹ und R¹⁰: C₁- bis C₁₀-Alkyl, C₆- bis C₁₅-Aryl oder C₃- bis C₁₀-cycloalkyl,
   - Y: Stickstoff, Phosphor, Arsen, Antimon oder Wismut,
   - Z: Sauerstoff, Schwefel, Selen oder Tellur,
   - n: eine ganze Zahl im Bereich von 0 bis 10,
   - R⁵: 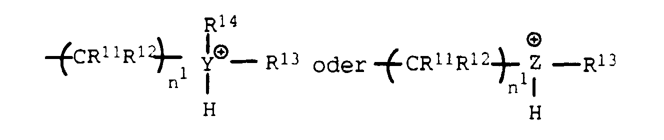 mit
   - R¹¹ und R¹²: Wasserstoff, C₁- bis C₁₀-Alkyl, C₆- bis C₁₅-Aryl oder C₃- bis C₁₀-cycloalkyl,
   - R¹¹ und R¹⁴: C₁- bis C₁₀-Alkyl, C₆- bis C₁₅-Aryl oder C₃- bis C₁₀-Cycloalkyl,
   - n¹: eine ganze Zahl im Bereich von 0 bis 10,
   - X¹ bis X⁴: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁵-, -NR¹⁵ R¹⁶ oder 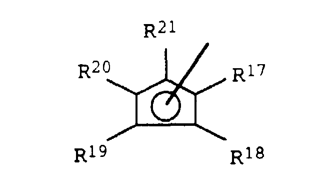 mit
   - R¹⁵ und R¹⁶: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
   - R¹⁷ bis R²¹: Wasserstoff, C₁- bis C₁₀-Alkyl, 5- bis 7-gliedriges Cycloalkyl, das seinerseits ein C₁- bis C₁₀-Alkyl als Substituent tragen kann, C₆-bis C₁₅-Aryl oder Arylalkyl, wobei gegebenenfalls auch zwei benachbarte Reste gemeinsam für 4 bis 15 C-Atomen aufweisende cyclische Gruppen stehen können, Si(R²²)₃, 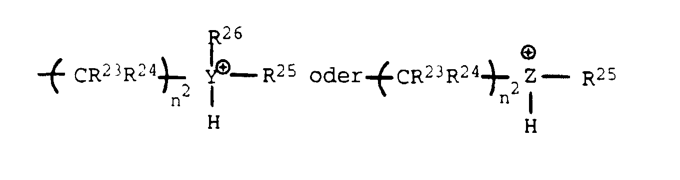 mit
   - R²²: C₁- bis C₁₀-Alkyl, C₆- bis C₁₅-Aryl oder C₃- bis C₁₀-cycloalkyl,
   - R²³ und R²⁴: Wasserstoff, C₁- bis C₁₀-Alkyl, C₆- bis C₁₅-Aryl oder C₃- bis C₁₀-cycloalkyl,
   - R²⁵ und R²⁶: C₁ bis C₁₀-Alkyl, C₆- bis C₁₅-Aryl oder C₃- bis C₁₀-cycloalkyl,
   - n²: eine ganze Zahl im Bereich von 0 bis 10
   und
   - o, p, q, r: ganze Zahlen im Bereich von 0 bis 4, wobei die Summe o+p+q+r+1 der Wertigkeit von M entspricht
   und
B) eine metalloceniumionenbildende Verbindung
enthalten.

Von den bei dem erfindungsgemäßen Verfahren eingesetzten Metallocenkomplexen der allgemeinen Formel I sind diejenigen bevorzugt, bei denen
- M: für Titan, Zirkonium oder Hafnium steht, insbesondere für Titan,
- R¹ bis R⁴: für Wasserstoff, C₁- bis C₆-Alkyl, C₆- bis C₁₅-Aryl oder wobei gegebenenfalls zwei benachbarte Reste für 8 bis 12 C-Atome aufweisende cyclische Gruppen stehen, insbesondere für Wasserstoff,
- R⁵: 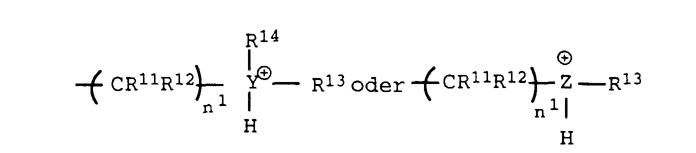 bedeutet, mit
- R¹¹ und R¹²: Wasserstoff oder C₁- bis C₄-Alkyl, insbesondere Wasserstoff, Methyl oder Ethyl,
- R¹³ und R¹⁴: C₁- bis C₆-Alkyl, insbesondere Methyl, Ethyl, n-Propyl, iso-Propyl, n-Butyl oder tert.-Butyl oder Phenyl,
- n¹: eine ganze Zahl im Bereich von 1 bis 4,
- Y: Stickstoff oder Phosphor,
- Z: Sauerstoff oder Schwefel,
- X¹ bis X⁴: für Chlor, C₁- bis C₄-Alkyl oder 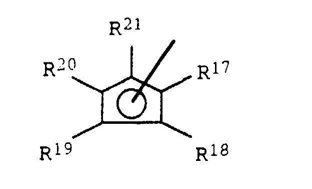 steht, mit
- R¹⁷ bis R²¹: Wasserstoff, C₁- bis C₆-Alkyl, C₆- bis C₁₅-Aryl oder wobei gegebenenfalls zwei benachbarte Reste für 8 bis 12 C-Atome aufweisende cyclische Gruppen stehen oder 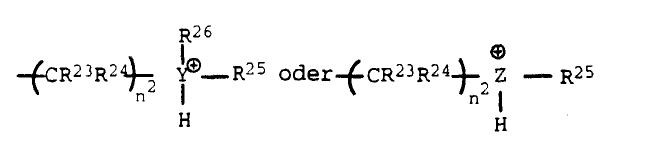
- R²³ und R²⁴: Wasserstoff oder C₁- bis C₄-Alkyl, insbesondere Wasserstoff, Methyl oder Ethyl,
- R²⁵ und R²⁶: C₁- bis C₆-Alkyl, insbesondere Methyl, Ethyl, n-Propyl, iso-Propyl, n-Butyl oder tert.-Butyl oder Phenyl
und
- n²: eine ganze Zahl im Bereich von 1 bis 4.

Besonders bevorzugt sind Metallocenkomplexe der allgemeinen Formel I, in denen R⁵ für 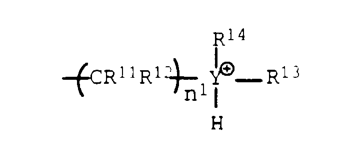 steht, insbesondere für 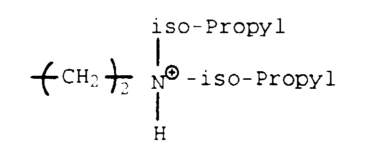 und R¹ bis R⁴ Wasserstoff bedeuten. Bevorzugt ist es auch, insbesondere wenn M für Titan steht, wenn X¹, X² und X³ für Chlor stehen und o für 1, p für 1, q für 1 und r für O oder wenn X¹ und X² für Chlor stehen und X³ die Bedeutung von 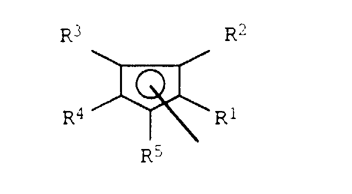 hat und o für 1, p für 1, q für 1 und r für O stehen, so daß also symmetrische Komplexe entstehen.

Beispiele für besonders bevorzugte Metallocenkomplexe der allgemeinen Formel I sind:
Trichloro-η⁵-[2-(N,N-diisopropylammonium)-ethyl-cyclopentadienyl]-titanium(IV)-chlorid
Dichloro-di-{η⁵-[2-(N,N-diisopropylammonium)-ethyl-cyclopentadienyl]}-titanium(IV)-dichlorid
Trichloro-η⁵-[2-(N,N-diisopropylammonium)-ethyl-cyclopentadienyl]-zirkonium(IV)-chlorid
Dichloro-di-{η⁵-[2-(N,N-diisopropylammonium)-ethyl-cyclopentadienyl]}-zirkonium(IV)-dichlorid
Trichloro-η⁵-[2-(N,N-dimethylammonium)-ethyl-cyclopentadienyl]-titanium(IV)-chlorid
Dichloro-di-{η⁵-[2-(N,N-dimethylammonium)-ethyl-cyclopentadienyl]}-titanium(IV)-dichlorid
Trichloro-η⁵-[2-(N,N-dimethylammonium)-ethyl-cyclopentadienyl]-zirkonium(IV)-chlorid
Dichloro-di-{η⁵-[2-N,N-dimethylammonium)-ethyl-cyclopentadienyl]}-zirkonium(IV)-dichlorid
Dichloro-η⁵-[2-(N,N-diisopropylammonium)-ethyl-cyclopentadienyl]-(trimethylsilyl-cyclopentadienyl)-titanium(IV)-chlorid
Dichloro-η⁵-[2-(N,N-diisopropylammonium)-ethyl-cyclopentadienyl]-(trimethylsilylcyclopentadienyl)-zirkonium(IV)-chlorid
Dichloro-cyclopentadienyl-η⁵-[2-(N,N-diisopropylammonium)-ethylcyclopentadienyl]-titanium(IV)-chlorid
Dichloro-cyclopentadienyl-η⁵-[2-(N,N-diisopropylammonium)-ethylcyclopentadienyl]-zirkonium(IV)-chlorid

Es können auch Mischungen verschiedener Metallocenkomplexe I eingesetzt werden.

Die Herstellung der Metallocenkomplexe I kann so erfolgen, daß man zunächst durch Umsetzung von Cyclopentadienyl-Lithium oder Cyclopentadienyl-Natrium mit einem Heteroatom funktionalisierten Chloralkan, die mit dem Heteroatom funktionalisierten Cyclopentadienylsysteme herstellt, wie in Journal of Organometallic Chemistry, 1992, 423, 31 - 38 und Journal of Organometallic Chemistry, 1994, 480, C18 - C19 beschrieben. Anschließend kann man durch Umsetzung der mit dem Heteroatom funktionalisierten Cyclopentadienylsysteme mit Alkyllithium, beispielsweise n-Butyllithium die entsprechende mit dem Heteroatom funktionalisierten Cyclopentadienyl-Lithium-Systeme herstellen, beispielsweise in Journal of Organometallic Chemistry, 1995, 486, 287 - 289 beschrieben. Diese können nun vorzugsweise mit MCl₄ zu den entsprechenden Metallocenkomplexen umgesetzt werden, wie in Journal of Organometallic Chemistry, 1995, 486, 287 - 289 beschrieben, wobei die Metallocenkomplexe jedoch noch nicht kationisch funktionalisierte Cyclopentadienylliganden tragen. Die Umsetzung zu den Metallocenkomplexen der allgemeinen Formel I kann durch Zugabe von Säuren jeglicher Art erfolgen, wie in Journal of Organometallic Chemistry, 1995, 486, 287 - 289 beschrieben.

Durch die Zugabe dieser Säuren erhält man zu den Metallocenkomplexen der allgemeinen Formel I ein Gegenion, das sich aus der Art der zugegebenen Säure ableitet. Diese Gegenionen können beispielsweise sein: Halogenide, Carbonsäureanionen, Sulfate, Phosphate, Carbonate, Nitrate, PF₆-, BF₄- oder HPO₄²⁻. Die Art des Gegenions ist unkritisch. Bevorzugt sind Halogenide, insbesondere Chloride.

Geeignete metalloceniumionenbildende Verbindungen B) sind insbesondere starke, neutrale Lewissäuren, ionische Verbindungen mit lewissauren Kationen, ionische Verbindungen mit Brönsted-Säuren als Kation und Alumoxanverbindungen.

Als starke, neutrale Lewissäuren sind Verbindungen der allgemeinen Formel IV

M¹X⁵X⁶X⁷ IV

bevorzugt, in der
- M¹: ein Element der III. Hauptgruppe des Periodensystems bedeutet, insbesondere B, Al oder Ga, vorzugsweise B,
- X⁵, X⁶ und X⁷: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X⁵, X⁶ und X⁷ gleich sind, vorzugsweise Tris(pentafluorphenyl)boran.

Als ionische Verbindungen mit lewissauren Kationen sind Verbindungen der allgemeinen Formel V

[(A^{a+})Q₁Q₂...Q_{z}]^{d+} V

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionenbildende Verbindung B) sind offenkettige oder cyclische Alumoxanverbindungen der allgemeinen Formel II oder III 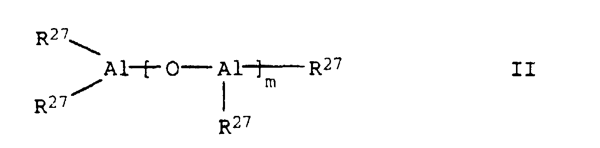 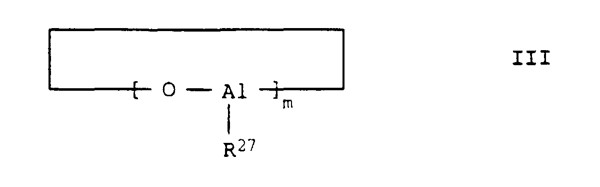 wobei
- R²⁷: eine C₁- bis C₄-Alkylgruppe bedeutet, bevorzugt Methyl- oder Ethylgruppe und
- m: für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als Komponente B) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Die Katalysatorsysteme können auch in geträgerter Form eingesetzt werden.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Weitere Träger sind u.a. feinteilige Polyolefine, beispielsweise feinteiliges Polypropylen oder Magnesiumchlorid.

Das erfindungsgemäße Verfahren kann in der Gasphase, in Suspension, in Lösung und in flüssigen Monomeren durchgeführt werden. Als Suspensionsmittel eignen sich beispielsweise aliphatische Kohlenwasserstoffe. Bevorzugt wird das erfindungsgemäße Verfahren in Lösung durchgeführt, bevorzugt in Toluol als Lösungsmittel.

Hierbei hat es sich als besonders bevorzugt erwiesen, wenn man den Metallocenkomplex der allgemeinen Formel I (mit seinem Gegenion) bei Temperaturen im Bereich von -80 bis 110°C in Toluol suspendiert und die metalloceniumionenbildende Verbindung, ebenfalls vorzugsweise als toluolische Lösung, bei einem Druck von 0,5 bis 50 bar hinzugibt. Die eigentlichen Polymerisationsbedingungen sind an sich unkritisch, bevorzugt sind Temperaturen im Bereich von -50 bis 300°C, Drücke im Bereich von 0,5 bis 3000 bar und Reaktionszeiten von 0,1 bis 24 Stunden. Die Polymerisation kann durch Zugabe von beispielsweise einer methanolisch/wäßrigen Lösung von HCl gestoppt werden.

Die mittlere Molmasse der gebildeten Polymerisate kann mit den in der Polymerisationstechnik üblichen Methoden gesteuert werden, beispielsweise durch Zufuhr von Reglern wie Wasserstoff.

Als C₂- bis C₁₀-Alkene, die zur Polymerisation eingesetzt werden können, eignen sich insbesondere Ethylen, aber auch Propylen oder höhere Alk-1-en wie But-1-en, Pent-1-en und Hex-1-en. Unter dem Begriff Polymerisate werden sowohl Homo- als auch Copolymerisate verstanden.

Die nach dem erfindungsgemäßen Verfahren hergestellten Polymerisate lassen sich gut verarbeiten und eignen sich zur Herstellung von Fasern, Folien und Formkörpern.

Das erfindungsgemäße Verfahren zeichnet sich insbesondere dadurch aus, daß die verwendeten Metallocenkomplexe luft- und feuchtigkeitsunempfindlich und dadurch gut handhabbar sind.

### Beispiele

### Beispiele 1 bis 3: Herstellung der Metallocenkomplexe I

Beispiel 1: Herstellung von

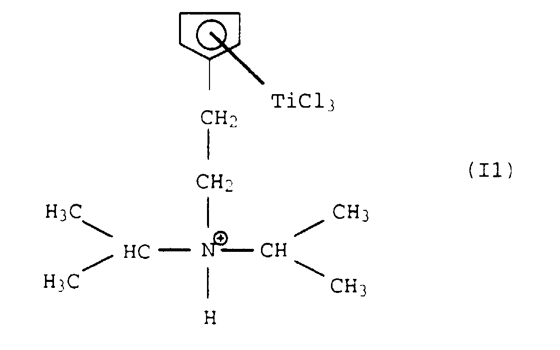

Zu einer Lösung von 1,45 g (7,65 mmol) TiCl₄ in 70 ml Toluol tropfte man bei -30°C eine Lösung von 7,65 mmol 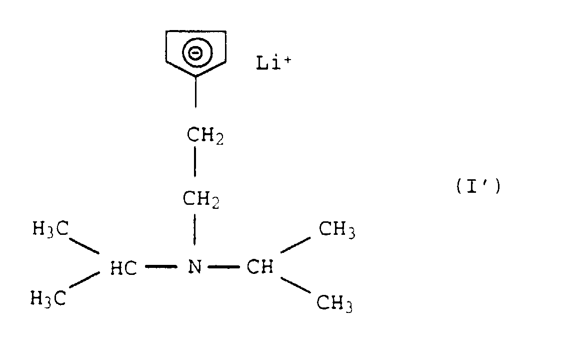 in 40 ml Ether (dargestellt aus 1,48 g (7,65 mmol) 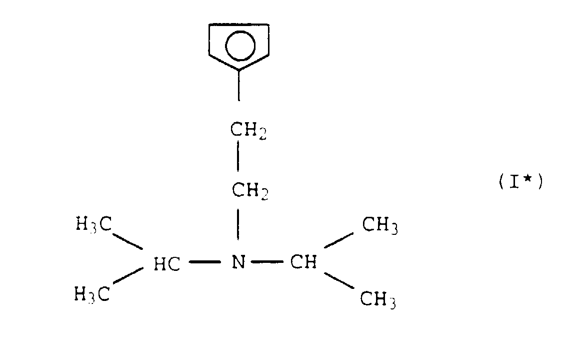 und 4,78 ml(7,65 mmol) einer 1,6 molaren n-Butyl-Lithium-Lösung in Diethylether). Anschließend ließ man das Reaktionsgemisch innerhalb von 2 h auf Raumtemperatur erwärmen und rührte weitere 14 h. Man filtrierte die Lösung und zog das Lösungsmittel im Vakuum ab. Das Produkt wurde in Form eines tiefroten Öls erhalten. Ausb.: 1,70 g (64 %).

¹H-NMR (CDCl₃):δ = 0.91 (d, ³J = 6.6 Hz, 12H, CH-CH₃), 2.69 (t, ³J = 7.4 Hz, 2H, Cp-CH₂), 2.88 (t, ³J = 6.8 Hz, 2H, N-CH₂), 2.99 (m, 2H, CH-CH₃), 6.86, 6,89 (m, 4H, Cp-H).

500 mg (1.44 mmol) dieses Produktes wurden mit 15 ml HCl-gesättigter Methanol-Lösung versetzt und 30 min. gerührt. Nach Entfernen des Lösungsmittels im Vakuum wurde zweimal mit je 20 ml Pentan gewaschen und man erhielt einen orangen-braunen Feststoff. Ausb.: 510 mg (1.34 mmol, 93 %). Schmp.: 130°C (Zers.).

¹H-NMR (CD₃OD): δ = 1.42, 1.44 (2d, ³J = 4.8 Hz, 12H, CH-CH₃), 3.24 (m, 2H, Cp-CH₂), 3.47 (m, 2H, N-CH₂), 3.80 (m, 2H, CH-CH₃), 6.61, 6.67 (m, 4H, Cp-H).

¹³C-NMR (CD₃OD): δ = 17.2, 18.7 (CH-CH₃), 29.2 (Cp-CH₂), 47.5 (CH₂-N), 56.6 (CH-CH₃), 120.4, 121.2 (Ring-CH=), 133.7 (Ring =C-CH₂-CH₂).

### Beispiel 2: Herstellung von

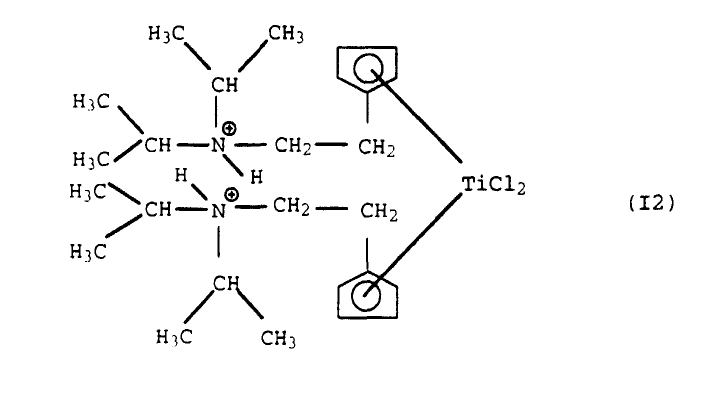

Zu einer Lösung von 1,92 g (10,1 mmol) TiCl₄ in 80 ml Toluol tropfte man bei -40°C eine Lösung von 20,2 mmol I' in 80 ml Ether (dargestellt aus 3,90 g (20,2 mmol) I* und 12,60 ml (20,2 mmol) einer 1.6 molaren n-Butyl-Lithium-Lösung in Diethylether). Anschließend ließ man das Reaktionsgemisch innerhalb von 6 h auf Raumtemperatur erwärmen und rührte weitere 10 h. Man dekantierte vom ausgefallenen Feststoff ab und wusch den Rückstand mit 2 x 30 ml kaltem (-40°C) Pentan. Man erhielt einen tiefroten Feststoff. Nach Umkristallisation aus Toluol erhielt man rote Kristalle. Ausb.: 2,50 g (49 %) . Schmp.: 156°C (Zers.).

¹H-NMR (CDCl₃): δ = 0.92 (d, ³J = 6.5 Hz, 24H, CH-CH₃), 2,62 (m, 4H, Cp-CH₂), 2.69 (m, 4H, N-CH₂), 2.99 (m, 4H, CH-CH₃), 6.32 - 6.36 (m, 8H, Cp-H). ¹H-NMR (C₆D₆): δ = 0.90 (d, ³J = 6.6 Hz, 24H, CH-CH₃), 2.60 (m, 4H, Cp-CH₂), 2.93 (m, 8H, N-CH₂, CH-CH₃), 5.76 (t, ³J = 2.6 Hz, 4H, Cp-H), 6.13 (t, ³J = 2.7 Hz, 4H, Cp-H).

¹³C-NMR (C₆D₆): δ = 21.0 (CH-CH₃), 33.1 (Cp-CH₂), 45.6 (CH₂-N), 48.2 (CH-CH₃), 114.6, 122.9 (Ring-CH =), 136.7 (Ring = C-CH₂-CH₂).

MS (LSIMS) [m/z (rel. Int. %)]: 503 (3) [M⁺+1H], 468 (3) [M⁺-2Cl], 114 (100) [i(C₃H₇)₂NCH₂CH₂⁺], 65 (8) [C₅H₅⁺].

| | | |
|---|---|---|
| CHN: C₂₆H₄₄Cl₄N₂Zr(503.43). | Ber. : C 62.03 | H 8.80 N 5.56 |
| | Gef.: C 61.92 | H 8.68 N 5.43 |
| Cl-Analyse (nach Schöninger) | Ber.: 14.08 | Gef.: 12.97 |

550 mg (1,09 mmol) dieses Produktes wurden mit 15 ml HCl-gesättigter Methanol-Lösung versetzt und 30 min. gerührt. Nach Entfernen des Lösungsmittels im Vakuum erhielt man einen rot-braunen Feststoff. Ausb.: 628 mg (quantitativ). Schmp.: 144°C (Zers.).

¹H-NMR (CD₃OD): δ = 1.39, 1.40 (2d, ³J = 6.6 Hz, 24H, CH-CH₃), 3.33 (m, 4H, Cp-CH₂), 3.56 (m, 4H, N-CH₂), 3.78 (m, 4H, CH-CH₃), 6.44 (t, ³J = 2.5 Hz, 4H, Cp-H), 6.74 (t, ³J = 2.7 Hz, 4H, Cp-H).

¹³C-NMR (CD₃OD): δ = 17.2, 18.8 (CH-CH₃), 29.2 (Cp-CH₂), 47.3 (CH₂-N), 56.5 (CH-CH₃), 115.8, 125.1 (Ring -CH=), 132.6 (Ring -CH=), 132.6 (Ring =C-CH₂-CH₂).

| | | |
|---|---|---|
| CHN: C₂₆H₄₆Cl₄N₂Ti (576.35). | Ber.: C 54.18 | H 8.04 N 4.86 |
| | Gef.: C 53.89 | H 8.30 N 4.72 |
| Cl-Analyse (nach Schöninger) | Ber.: 24.60 | Gef.: 26.33 |

### Beispiel 3: Herstellung von

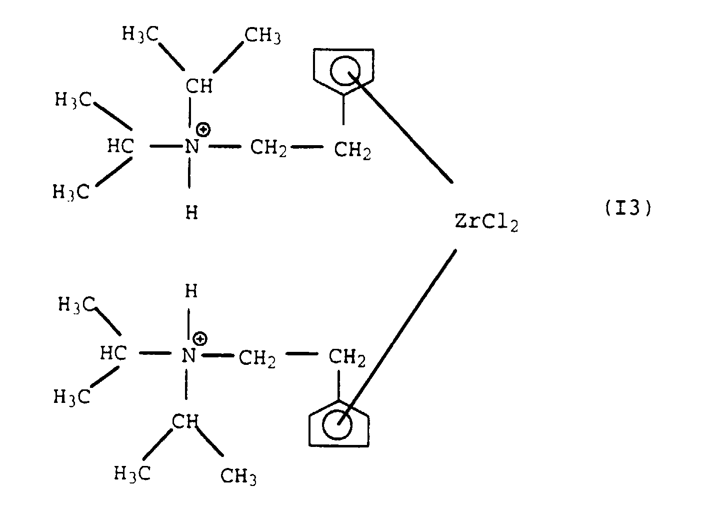

Zu einer Suspension von 2,35 g (10,10 mmol) ZrCl₄ in 80 ml Toluol tropfte man bei -40°C eine Lösung von 20,20 mmol I' in 80 ml Ether (dargestellt aus 3,90 g (20,20 mmol) I* und 12,60 ml (20,20 mmol) einer 1.6 molaren n-Butyl-Lithium-Lösung in Diethylether). Anschließend ließ man das Reaktionsgemisch innerhalb von 4 h auf Raumtemperatur erwärmen und rührte weitere 24 h. Man dekantierte vom ausgefallenen Feststoff ab und wusch den Rückstand mit 2 x 50 ml kaltem (-40°C) Pentan. Man erhielt einen farblosen Feststoff. Nach Umkristallisation aus Toluol erhielt man farblose Kristalle. Ausb.: 3,15 g (57 %). Schmp.: 124°C (Zers.).

¹H-NMR (C₆D₆): δ = 0.90 (d, ³J = 6.6 Hz, 24H, CH-CH₃), 2,57 (t, ³J = 6.5 Hz, 4H, Cp-CH₂), 2.82 (m, 4H, N-CH₂), 2,90 (m, 4H, CH-CH₃), 5.77 (t, ³J = 2.7 Hz, 4H, Cp-H), 6.02 (t, ³J = 2.7 Hz, 4H, Cp-H).

¹³C-NMR (C₆D₆): δ = 21.1 (CH-CH₃), 33.0 (Cp.CH₂), 47.0 (CH₂-N), 48.6 (CH-CH₃), 109.1, 113.2, 113.5, 117.1 (Ring -CH=), 130.3 (Ring =C-CH₂-CH₂).

MS (LSIMS) [m/z (rel. Int. %)]: 544 (2) [M⁺], 114 (100) [i-(C₃H₇)₂NCH₂CH₂⁺], 65 (2) [C₅H₅⁺].

| | | |
|---|---|---|
| CHN: C₂₆H₄₄N₂Cl₂Zr (546.78). | Ber.: C 57.11 | H 8.11 N 5.12 |
| | Gef.: C 56.33 | H 8.08 N 5.00 |
| Cl-Analyse (nach Schöninger) | Ber.: 12.96 | Gef.: 13.57 |

530 mg (0,97 mmol) dieses Produktes wurden mit 20 ml HCl-gesättigter Methanol-Lösung versetzt und 30 min. gerührt. Nach Entfernen des Lösungsmittels im Vakuum erhielt man einen beigen Feststoff. Ausb.: 600 mg (quantitativ). Schmp.: 188°C (Zers.).

¹H-NMR (CD₃OD): δ = 1.39, 1.41 (2d, ³J = 6.6 Hz, 24H, CH-CH₃), 3.19 (m, 4H, Cp-CH₂), 3.46 (m, 4H, N-CH₂), 3.78 (m, 4H, CH-CH₃), 6,45 (m, 4H, Cp-H), 6.61 (m, 4H, Cp-H).

¹³C-NMR (CD₃OD): δ = 17.3, 18.9 (CH-CH₃), 28,8 (Cp-CH₂), 48.0 (CH₂-N), 56.6 (CH-CH₃), 113.5, 119.7 (Ring -CH=), 129,2 (Ring =C-CH₂-CH₂).

| | | |
|---|---|---|
| CHN: C₂₆H₄₆N₂Cl₄Zr (619.70). | Ber. : C 50,39 | H 7.48 N 4.52 |
| | Gef.: C 49,52 | H 7.25 N 4.36 |
| CI-Analyse (nach Schöninger) | Ber.: 22.88 | Gef.: 24.10 |

### Beispiele 4 bis 6: Herstellung von Polyethylen (PE)

Die Metallocenkomplexe I1, I2 und I3 wurden jeweils bei Raumtemperatur in Toluol suspendiert. Unter Ethylenatmosphäre (1 bar) wurden jeweils Methylalumoxan (MAO) (10%ige Lösung in Toluol) dazugetropft. Nach 5 min. wurde die Lösung durch entstehendes Polyethylen langsam trübe und erwärmte sich. Nach einer Reaktionszeit wurde die Polymerisation durch Zusatz von 400 ml methanolischer/wäßriger HCl gestoppt. Das Polyethylen wurde abfiltriert, mit Wasser und Aceton gewaschen und bis zur Gewichtskonstanz getrocknet.

Die Mengen der Einsatzstoffe, die Reaktionszeiten und die Eigenschaften der entstandenen Polyethylene sind in der nachfolgenden Tabelle zusammengefaßt.

Der η-Wert wurde nach ISO 1628-3 bestimmt, die Gewichtsmittelwerte M_{w} und Zahlenmittelwerte Mₙ mittels Gelpermeationschromatographie.

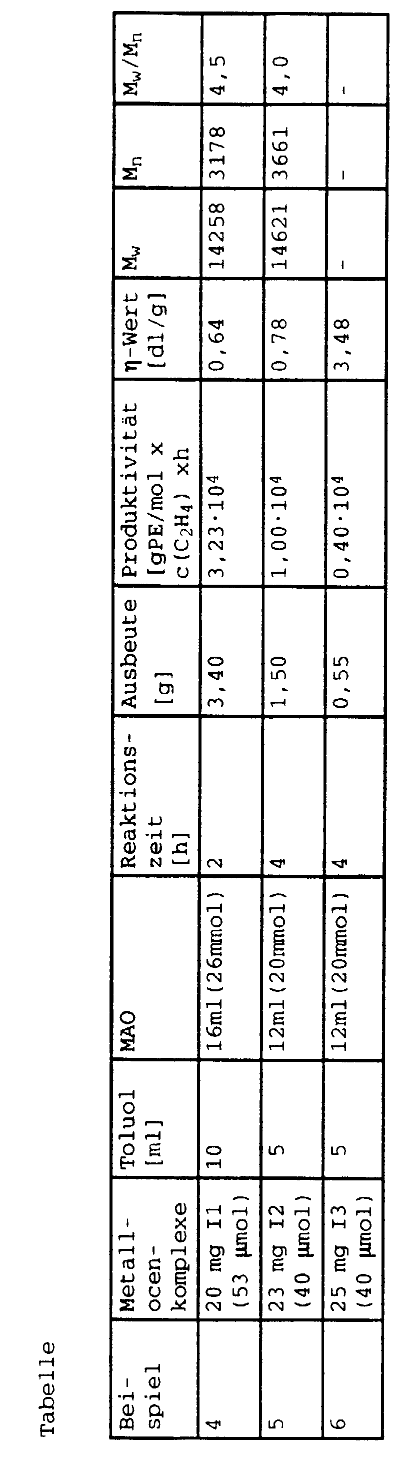

## Patentansprüche

1. Verfahren zur Herstellung von Polymerisaten von C₂- bis C₁₀-Alkenen in Gegenwart von Katalysatorsystemen, dadurch gekennzeichnet, daß als Katalysatorsysteme solche eingesetzt werden, die als aktive Bestandteile
A) einen Metallocenkomplex der allgemeinen Formel I 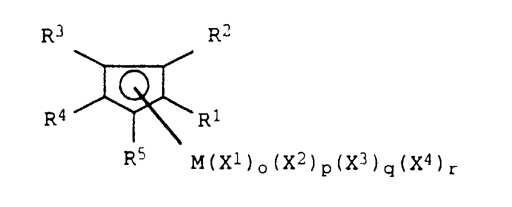 in der die Substituenten und Indices folgende Bedeutung haben:
M Titan, Zirkonium, Hafnium, Vanadium, Niob oder Tantal,
R¹ bis R⁴ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, 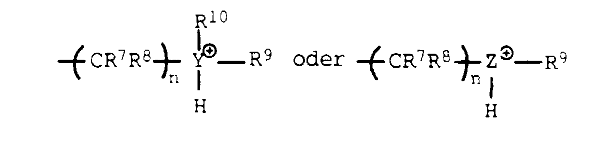 mit
R⁶ C₁- bis C₁₀-Alkyl, C₆- bis C₁₅-Aryl oder C₃- bis C₁₀-Cycloalkyl,
R⁷ und R⁸ Wasserstoff, C₁- bis C₁₀-Alkyl, C₆- bis C₁₅-Aryl oder C₃- bis C₁₀-Cycloalkyl,
R⁹ und R¹⁰ C₁- bis C₁₀-Alkyl, C₆- bis C₁₅-Aryl oder C₃-bis C₁₀-Cycloalkyl,
Y Stickstoff, Phosphor, Arsen, Antimon oder Wismut,
Z Sauerstoff, Schwefel, Selen oder Tellur,
n eine ganze Zahl im Bereich von 0 bis 10,
R⁵ 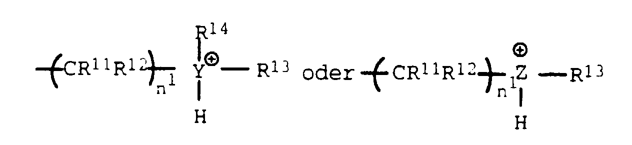
mit
R¹¹ und R¹² Wasserstoff, C₁- bis C₁₀-Alkyl, C₆- bis C₁₅-Aryl oder C₃- bis C₁₀-cycloalkyl,
R¹³ und R¹⁴ C₁- bis C₁₀-Alkyl, C₆- bis C₁₅-Aryl oder C₃- bis C₁₀-Cycloalkyl,
n¹ eine ganze Zahl im Bereich von 0 bis 10,
X¹ bis X⁴ Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁵-, -NR¹⁵R¹⁶ oder 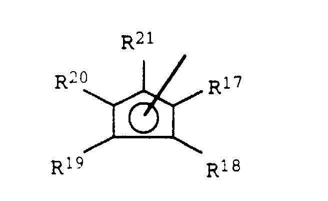
mit
R¹⁵ und R¹⁶ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
R¹⁷ bis R²¹ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atomen aufweisende cyclische Gruppen stehen können, Si(R²²)₃, 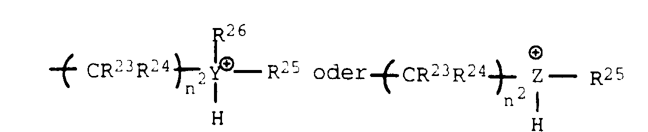
mit
R²² C₁- bis C₁₀-Alkyl, C₆- bis C₁₅-Aryl oder C₃- bis C₁₀-Cycloalkyl,
R²³ und R²⁴ Wasserstoff, C₁- bis C₁₀-Alkyl, C₆- bis C₁₅-Aryl oder C₃- bis C₁₀-Cycloalkyl,
R²⁵ und R²⁶ C₁ bis C₁₀-Alkyl, C₆- bis C₁₅-Aryl oder C₃- bis C₁₀-Cycloalkyl,
n² eine ganze Zahl im Bereich von 0 bis 10
und
o, p, q, r ganze Zahlen im Bereich von 0 bis 4, wobei die Summe o+p+q+r+1 der Wertigkeit von M entspricht
und
B) eine metalloceniumionenbildende Verbindung
enthalten.

2. Verfahren nach Anspruch 1, dadurch gekennzeichnet, daß M in der allgemeinen Formel I für Titan, Zirkonium oder Hafnium steht.

3. Verfahren nach den Ansprüchen 1 bis 2, dadurch gekennzeichnet, daß R⁵ in der allgemeinen Formel I für 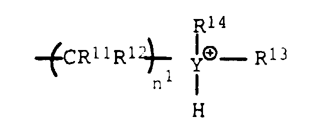 steht.

4. Verfahren nach den Ansprüchen 1 bis 3, dadurch gekennzeichnet, daß R⁵ in der allgemeinen Formel I 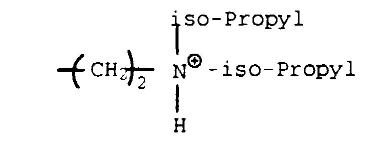 steht.

5. Verfahren nach den Ansprüchen 1 bis 4, dadurch gekennzeichnet, daß R¹ bis R⁴ in der allgemeinen Formel I für Wasserstoff stehen.

6. Verfahren nach den Ansprüchen 1 bis 5, dadurch gekennzeichnet, daß als metalloceniumionenbildende Verbindung B) offenkettige oder cyclische Alumoxanverbindungen der allgemeinen Formel II oder III 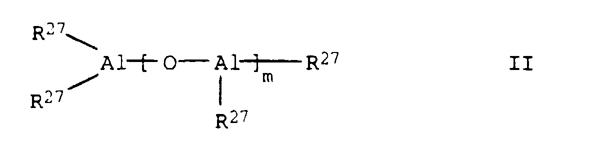 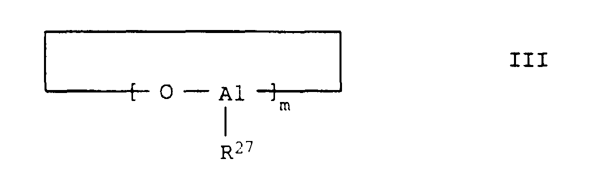 wobei
R²⁷ eine C₁- bis C₄-Alkylgruppe bedeutet und
m für eine ganze Zahl von 5 bis 30 steht,
eingesetzt werden.

7. Verfahren nach den Ansprüchen 1 bis 6, dadurch gekennzeichnet, daß als C₂- bis C₁₀-Alken Ethylen eingesetzt wird.

## Claims

1. A process for preparing polymers of C₂-C₁₀ alkenes in the presence of catalyst systems comprising as active constituents
A) a metallocene complex of the general formula I 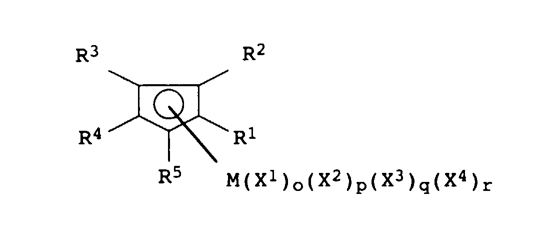 where the substituents and indices have the following meanings:
M is titanium, zirconium, hafnium, vanadium, niobium or tantalum,
R¹ to R⁴ are hydrogen, C₁-C₁₀-alkyl, 5- to 7-membered cycloalkyl which in turn can bear a C₁-C₁₀-alkyl as substituent, C₆-C₁₅-aryl or arylalkyl, where two adjacent radicals may also together be cyclic groups having from 4 to 15 carbon atoms, Si(R⁶)₃, 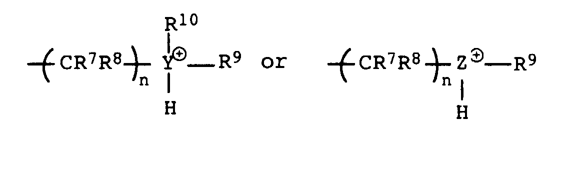 where
R⁶ is C₁-C₁₀-alkyl, C₆-C₁₅-aryl or C₃-C₁₀-cycloalkyl,
R⁷ and R⁸ are hydrogen, C₁-C₁₀-alkyl, C₆-C₁₅-aryl or C₃-C₁₀-cycloalkyl,
R⁹ and R¹⁰ are C₁-C₁₀-alkyl, C₆-C₁₅-aryl or C₃-C₁₀-cycloalkyl,
Y is nitrogen, phosphorus, arsenic, antimony, or bismuth,
Z is oxygen, sulfur, selenium or tellurium,
n is an integer in the range from 0 to 10,
R⁵ is 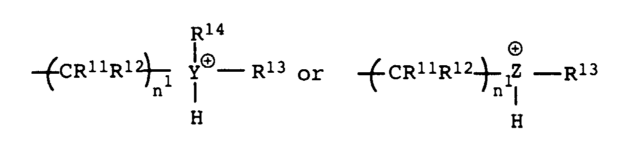
where
R¹¹ and R¹² are hydrogen, C₁-C₁₀-alkyl, C₆-C₁₅-aryl or C₃-C₁₀-cycloalkyl,
R¹³ and R¹⁴ are C₁-C₁₀-alkyl, C₆-C₁₅-aryl or C₃-C₁₀-cycloalkyl,
n¹ is an integer in the range from 0 to 10,
X¹ to X⁴ are fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR¹⁵, -NR¹⁵R¹⁶ or where 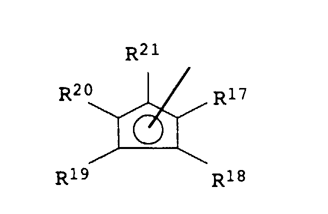
R¹⁵ and R¹⁶ are C₁-C₁₀-alkyl, C₆-C₁₅-aryl, alkylaryl, arylalkyl, fluoroalkyl or fluoroaryl, each having from 1 to 10 carbon atoms in the alkyl radical and from 6 to 20 carbon atoms in the aryl radical,
R¹⁷ to R²¹ are hydrogen, C₁-C₁₀-alkyl, 5-to 7-membered cycloalkyl which in turn can bear a C₁-C₁₀-alkyl as substituent, C₆-C₁₅-aryl or arylalkyl, where two adjacent radicals may also together be cyclic groups having from 4 to 15 carbon atoms, Si(R²²)₃, 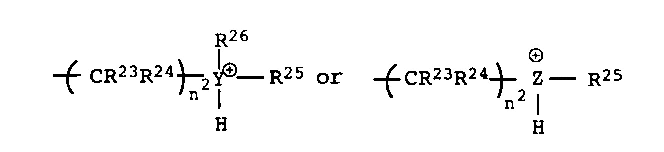
where
R²² is C₁-C₁₀-alkyl, C₆-C₁₅-aryl or C₃-C₁₀-cycloalkyl,
R²³ and R²⁴ are hydrogen, C₁-C₁₀-alkyl, C₆-C₁₅-aryl or C₃-C₁₀-cycloalkyl,
R²⁵ and R²⁶ are C₁-C₁₀-alkyl, C₆-C₁₅-aryl or C₃-C₁₀-cycloalkyl,
n² is an integer in the range from 0 to 10
and
o, p, q, r are integers in the range from 0 to 4, where the sum o+p+q+r+1 corresponds to the valence of M
and
B) a compound forming metallocenium ions.

2. A process as claimed in claim 1, wherein M in the general formula I is titanium, zirconium or hafnium.

3. A process as claimed in claim 1 or 2, wherein R⁵ in the general formula I is

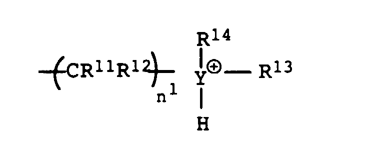

4. A process as claimed in any of claims 1 to 3, wherein R⁵ in the general formula I is

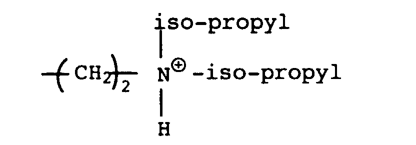

5. A process as claimed in any of claims 1 to 4, wherein R¹ to R⁴ in the general formula I are hydrogen.

6. A process as claimed in any of claims 1 to 5, wherein the compound B) forming metallocenium ions which is used is an open-chain or cyclic aluminoxane compound of the general formula II or III 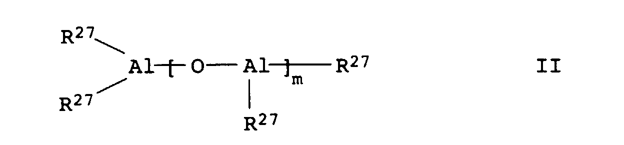 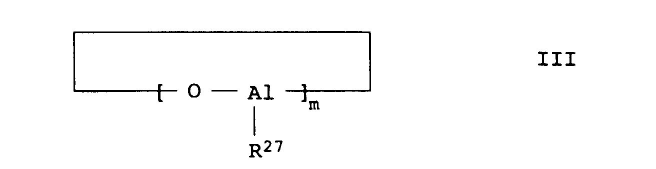 where
R²⁷ is a C₁-C₄-alkyl group and
m is an integer from 5 to 30.

7. A process as claimed in any of claims 1 to 6, wherein the C₂-C₁₀-alkene used is ethylene.

## Revendications

1. Procédé de préparation de polymères d'alcènes en C₂-C₁₀ en présence de systèmes catalytiques, caractérisé en ce que, comme systèmes catalytiques, on met en oeuvre ceux qui contiennent, comme composants actifs,
A) un complexe de métallocène de la formule générale I: 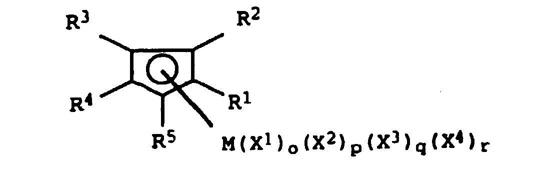 dans laquelle les substituants et indices ont les significations suivantes :
M est du titane, du zirconium, de l'hafnium, du vanadium, du niobium ou du tantale,
R¹ à R⁴ représentent de l'hydrogène, un groupe alkyle en C₁-C₁₀, cycloalkyle pentagonal à heptagonal, qui à son tour peut porter un alkyle en C₁-C₁₀ comme substituant, aryle en C₆-C₁₅ ou arylalkyle, deux radicaux voisins pouvant éventuellement aussi former conjointement des groupes cycliques présentant 4 à 15 atomes de C, Si(R⁶)₃, 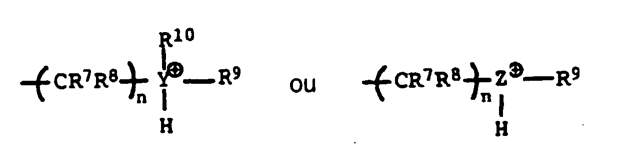 où
R⁶ représente un groupe alkyle en C₁-C₁₀, aryle en C₆-C₁₅ ou cycloalkyle en C₃-C₁₀,
R⁷ et R⁸ représentent de l'hydrogène, un groupe alkyle en C₁-C₁₀, aryle en C₆-C₁₅ ou cycloalkyle en C₃-C₁₀,
R⁹ et R¹⁰ représentent un groupe alkyle en C₁-C₁₀, aryle en C₆-C₁₅ ou cycloalkyle en C₃-C₁₀,
Y est de l'azote, du phosphore, de l'arsenic, de l'antimoine ou du bismuth,
Z est de l'oxygène, du soufre, du sélénium ou du tellure,
n est un nombre entier de l'ordre de 0 à 10,
R⁵ représente 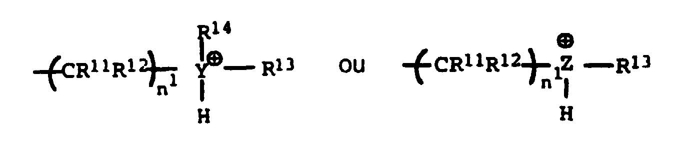
où
R¹¹ et R¹² représentent de l'hydrogène ou un groupe alkyle en C₁-C₁₀, aryle en C₆-C₁₅ ou cycloalkyle en C₃-C₁₀,
R¹³ et R¹⁴ représentent un groupe alkyle en C₁-C₁₀, aryle en C₆-C₁₅ ou cycloalkyle en C₃-C₁₀,
n¹ est un nombre entier de l'ordre de 0 à 10,
X¹ à X⁴ représentent du fluor, du chlore, du brome, de l'iode, de l'hydrogène, un groupe alkyle en C₁-C₁₀, aryle en C₆-C₁₅, alkylaryle avec 1 à 10 atomes de C dans le radical alkyle et 6 à 20 atomes de carbone dans le radical aryle, -OR¹⁵-, -NR¹⁵R¹⁶,
ou 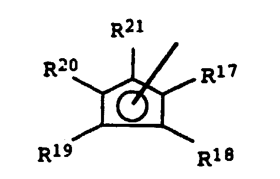
où
R¹⁵ et R¹⁶ représentent un groupe alkyle en C₁-C₁₀, aryle en C₆-C₁₅, alkylaryle, arylalkyle, fluoroalkyle ou fluoroaryle avec chaque fois 1 à 10 atomes de C dans le radical alkyle et 6 à 20 atomes de C dans le radical aryle,
R¹⁷ à R²¹ représentent de l'hydrogène ou un groupe alkyle en C₁-C₁₀, cycloalkyle pentagonal à heptagonal, qui à son tour peut porter un alkyle en C₁-C₁₀ comme substituant, aryle en C₆-C₁₅ ou arylalkyle, deux radicaux voisins pouvant éventuellement également former ensemble des groupes cycliques présentant 4 à 15 atomes de C, 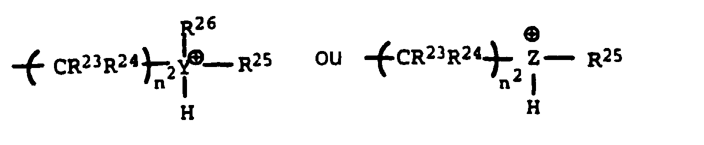
où
R²² représente un groupe alkyle en C₁-C₁₀, aryle en C₆-C₁₅ ou cycloalkyle en C₃-C₁₀,
R²³ et R²⁴ représentent de l'hydrogène ou un groupe alkyle en C₁-C₁₀, aryle en C₆-C₁₅ ou cycloalkyle en C₃-C₁₀,
R²⁵ et R²⁶ représentent un groupe alkyle en C₁-C₁₀, aryle en C₆-C₁₅ ou cycloalkyle en C₃-C₁₀,
n² est un nombre entier de l'ordre de 0 à 10,
et
o, p, q, r sont des nombres entiers de l'ordre de 0 à 4, la somme de o+p+q+r+1 correspondant à la valence de M,
et
B) un composé générateur d'ions métallocénium.

2. Procédé suivant la revendication 1, caractérisé en ce que M dans la formule générale I représente du titane, du zirconium ou de l'hafnium.

3. Procédé suivant l'une des revendications 1 et 2, caractérisé en ce que R⁵ dans la formule générale I représente :

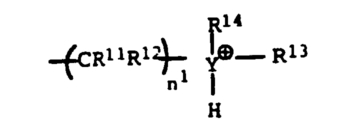

4. Procédé suivant l'une des revendications 1 à 3, caractérisé en ce que R⁵ dans la formule générale I représente :

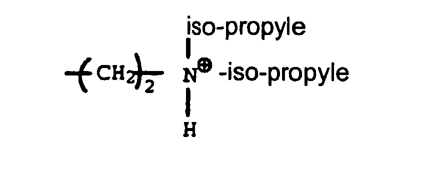

5. Procédé suivant l'une des revendications 1 à 4, caractérisé en ce que R¹ à R⁴ dans la formule générale I représentent de l'hydrogène.

6. Procédé suivant l'une des revendications 1 à 5, caractérisé en ce que, comme composé générateur d'ions métallocénium B), on met en oeuvre des composés d'alumoxane à chaîne ouverte ou cycliques des formules générales II ou III : 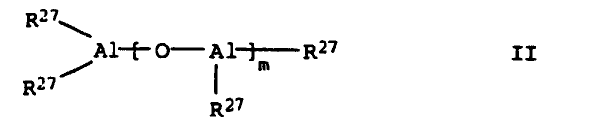 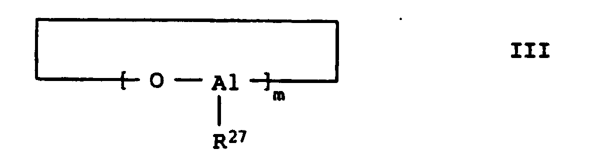 où
R²⁷ représente un groupe alkyle en C₁-C₄ et
m représente un nombre entier de 5 à 30.

7. Procédé suivant l'une des revendications 1 à 6, caractérisé en ce que, comme alcène en C₂-C₁₀, on met en oeuvre de l'éthylène.
